## Europäisches Patentamt
## European Patent Office
## Office européen des brevets

(19)

(11) Publication number: **0 253 286**
**B1**

(12) **EUROPEAN PATENT SPECIFICATION**

(45) Date of publication of the patent specification:
16.05.90

(51) Int. Cl.⁵: **B65D 88/54**

(21) Application number: **87109843.0**

(22) Date of filing: **08.07.87**

(54) Drain fitment for bulk containers.

(30) Priority: **17.07.86 US 887027**

(43) Date of publication of application:
**20.01.88 Bulletin 88/3**

(45) Publication of the grant of the patent:
**16.05.90 Bulletin 90/20**

(84) Designated Contracting States:
**DE GB NL**

(56) References cited:
**WO-A-85/03062**
**DE-A- 2 627 501**
**GB-A- 1 444 196**
**US-A- 3 642 172**
**US-A- 3 918 474**
**US-A- 4 421 253**

(73) Proprietor: **WEYERHAEUSER COMPANY, Tacoma, WA 98477(US)**

(72) Inventor: **Remaks, William J., 32000 Taylor Estes Road, Anchorage Kentucky 40223(US)**

(74) Representative: **Hübner, Hans-Jürgen, Dipl.-Ing., Mozartstrasse 31, D-8960 Kempten/Allgäu(DE)**

ACTORUM AG

## Description

The invention relates to a bulk container of the type having a side wall of multi-wall fibreboard with a side wall opening extending therethrough from an inner wall surface to an outer wall surface, and a plastic retainer member supportedly mounted within the container for retaining bulk flowables, a drain spout assembly mounted in the side wall opening and comprising a tubular spout projecting through the side wall opening, an annular flange provided at the inner end of the tubular spout and clamping means fastened on an outwardly projecting portion of the tubular spout, the side wall thereby being sandwiched between the flange and the clamping means, closure means provided at the inner end of the tubular spout for closing the flow path through the tubular spout, a tubular member for axial insertion into the tubular spout and for removal of the closure means and sealing means to seal the interface between the tubular spout and the tubular member.

A bulk container of this kind is known from US-A 4 421 253. The inner end of the tubular spout abuts against the wall of the plastic retainer member. This wall forms a diaphragm seal, which can be ruptured to permit discharge of the contents, when the tubular member is pushed axially into the tubular spout. The inner end of the tubular member is angled and pierces the diaphragm seal. The tubular member must be displaced inwards by a substantial axial length before a conical sealing surface of the tubular member will engage with the tubular spout and provide a seal therebetween. However, during the axial displacement of the tubular member flowables will escape through an annular gap formed between the tubular member and the spout. Such a leakage will be highly disadvantageous if dangerous fluids are contained in the container.

GB-A 1 444 196 shows a device for controlling discharge of a fluent material from an outlet arrangement of a container. The outlet arrangement comprises a tubular spout having a flange at its inner end, a nut threaded on an external thread at the outer end and a threaded closure plug which is screwed into the spout from the interior of the container. The front surface of the closure plug is provided with a plurality of circumferentially spaced recesses designed for reception of a plurality of prongs respectively projecting from the inner end of a tubular valve member, upon rotation of which the closure plug is unscrewed. The tubular valve member has an external thread engaging with the internal thread of the tubular spout. Thereby the valve member and the closure plug become coupled for a common movement. However, after having begun to unsrew the closure plug also in this arrangement fluid will escape through the annular gap formed between the internal thread of the tubular spout and the external threads of the plug and the valve member. The thread portion of the valve member must be completely screwed into the spout before an annular flange of the valve member engages with the annular front face of the spout.

During assembling the valve member a continuous leakage cannot be avoided and because any sealing means are missed also the mere contact of the flange of the valve member at the front face of the spout does not provide for a fluidtight seal. A further disadvantage consists in that besides of the clamping-nut no means are provided to prevent a rotation of the spout upon applying a torque on to the closure plug. A continuous fluid leakage would result from such a loosening of the spout.

Therefore, an object of this invention is to provide a bulk container of the kind mentioned at the beginning having a drain spout assembly which is simple, reliable and avoids even the smallest leakage of fluid.

This problem is solved by this invention in that the plastic retainer member has a drain opening extended therethrough in registry with the side wall opening , the annular flange is sealed to the plastic retainer member about the drain opening, that restraining means are operatively engaged to the multiwall fibreboard within the side wall opening for restraining rotation of the tubular spout relative to the plastic retainer member, that the closure means comprises a threaded closure plug screwed into a threaded portion of the tubular spout, that the tubular member has a portion designed for reception in the closure plug and that means are provided outside of the container, such that the tubular member may be gripped for translating movement of the portion into engagement with closure plug and into rotary movement of the closure plug to unscrew the latter and remove it from the tubular spout inwardly into the retainer member, and that the sealing means comprises a coupler movably mounted on the outer surface of the tubular member, threaded on the outer end of the tubular spout and pressing a sealing ring against the outer peripheral surface of the tubular member to provide a fluid-tight connection between the tubular spout and the tubular member but allowing a rotational and displaceable relative movement therebetween.

Thanks to this invention the tubular spout is firmly secured in the side wall opening and by no means can become rotated. Therefore, any leakage between the side wall and the spout is eliminated. Furthermore, the sealing means including the coupler provides a fluid-tight connection between the spout and the tubular operating member prior to and during the closure plug becomes operated and after that plug has been removed.

Prefered embodiment of the invention will be described in detail in connection with the drawings, in which

Figure 1 is a side cross-sectional view of a plugged drain spout assembly mounted to a fibreboard container, shown in part, prior to withdrawal of the contents;

Figure 2 is a partial sectional view taken along line 2–2 of Figure 1;

Figure 3 is a partially-exploded, sectional view of a drain spout assembly according to one embodiment of the invention;

Figure 4 is a sectional view of the partially-assembled drain spout assembly:

Figure 5 is a sectional view of the assembled drain spout assembly with a valve tube rotated by ninety-degrees relative to the illustration of Figure 4;

Figure 6 is a sectional view taken along view line 6–6 of Figure 4; and

Figure 7 is an exploded view illustrating the parts of the assembly according to a second embodiment of the invention and the location of the parts relative to the fibreboard container and bag.

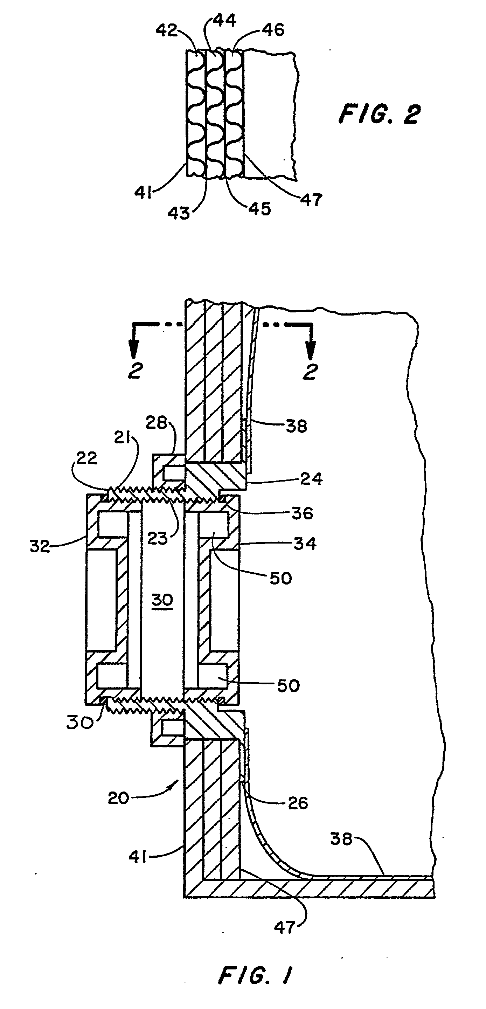

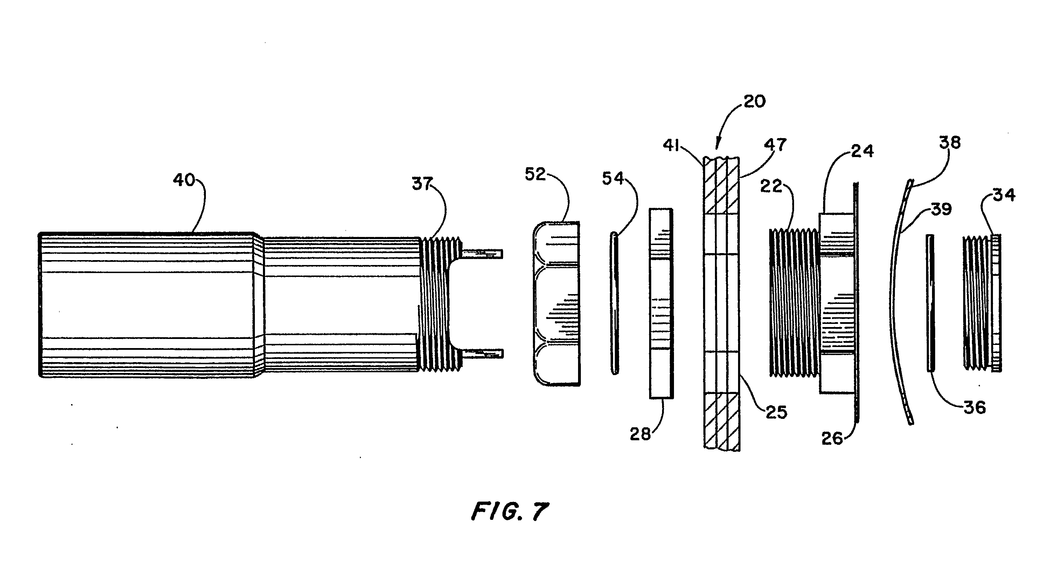

Figure 1 illustrates a drain spout assembly, in a closed condition, mounted to a fibreboard container 20. The drain spout assembly includes a tubular spout 22, projecting outwardly of the container 20, and connected to a hexagonal flange 24, seated within a side wall opening 25 (see Fig.7) extending through the side wall of the container 20, and which, in turn, is connected to an annular flange 26 located within the container surrounding the side wall opening 25. The annular flange 26 is abutted against the inner surface of the side wall of the container 20. The tubular spout 22, the hexagonal flange 24 and the annular flange 26 are preferably plastic and comprise a unitary assembly.

Threads 21, 23 are formed on both external and internal surfaces of the tubular spout 22 and on the internal surface of at least part of the hexagonal flange 24. A nut 28 is threadably engaged to the external thread 21 of the spout 22 in torqued engagement and abutment against the outer surface of the container side wall and the hexagonal flange 24. The tubular spout 22 projects outwardly of the container 20 beyond nut 28.

The drain spout assembly is provided with a bore 30 extending therethrough. The opposite ends of the bore 30, a illustrated in Figure 1, are closed by closure plugs 32, 34 which are threadably engaged to the internal threads 23 of the spout 22 and the hexagonal flange 24, respectively. An elastomeric seal 36, such as a rubber O-ring, is provided to further seal the threaded interface between the closure plug 34 and the hexagonal flange 24. A similar seal 31 is provided between the threaded interface of the closure plug 32 and spout 22.

A plastic bag 38 is sealingly secured to the annular flange 26 preferably on the side of the bag adjacent to the inner surface of the container side wall. The annular flange 26 extends about the periphery of a drain opening 39 (see Fig. 7) that passes through the bag 38. The drain opening 39 and the side wall opening 25 are aligned in registry with each other to allow passage of the tubular spout 22 therethrough during assembly of the drain spout assembly to the container 20.

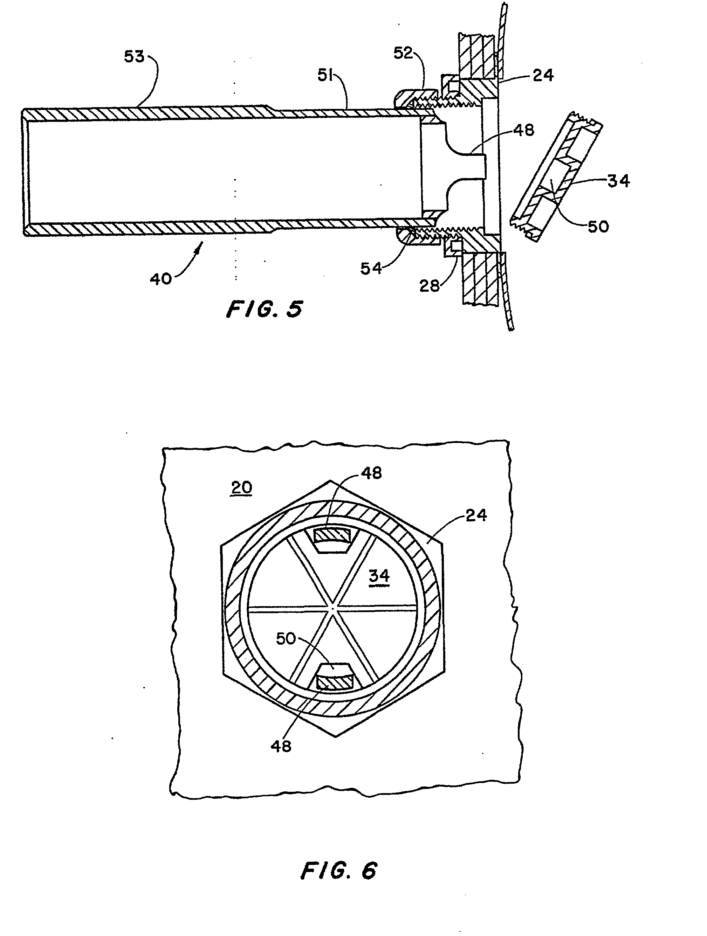

As shown in Figures 1 and 2, the container 20 preferably has a side wall made of triple-wall corrugated fibreboard. The triple-wall corrugated fibreboard comprises three corrugated sheets 42, 44, 46 and four spaced liner sheets 41, 43, 45, 47 of containerboard, one each of the corrugated sheets being interposed between a different pair of liner sheets and adhesively engaged thereto in a well known manner. The outermost liner sheets function as the outer and inner wall surface 41, 47, respectively, of the side wall of the container 20. The length of the hexagonal flange 24 is preferably not greater than the wall thickness of the container 20 and the hexagonal flange does not extend beyond the respective outer and inner surface 41, 47 of the container. The side wall opening 25 has a hexagonal crossection, as shown in Figure 6, complementary to the crossection of the hexagonal flange 24. Hexagonal flange 24 is closely received and tightly fitted against the fibreboard edges of the side wall which defines the periphery of the side wall opening 25. The close fit between the hexagonal flange 24 and the wall surrounding the side wall opening 25 prevents damaging rotation of the drain spout assembly relative to the bag 38 which could otherwise occur as the nut 28 and coupler 52 are connected to tubular spout 22, or when on assembly of the drain spout fitment, as described hereafter.

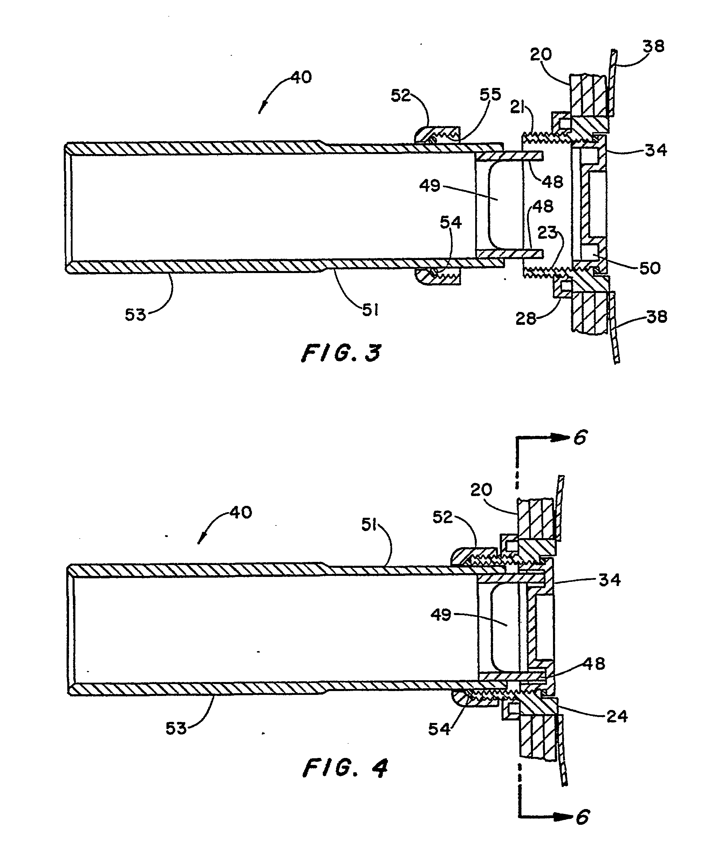

The plastic bag 38 may be filled with a fluid or solid or semi-solid flowables with the closure plugs 32, 34, in place, as shown in Fig. 1. In order to withdraw the flowables from the container 20, the outer closure plug 32 is first unscrewed from the tubular spout 22 and discarded or saved for subsequent use. A valve tube 40 is then aligned with the bore 30 of the drain spout assembly as shown in Figure 3. The valve tube 40 is provided with at least two peripherally spaced prongs 48 at the end of the valve tube adjacent the container 20. The prongs 48 are designed to be closely received within recesses 50 formed within the closure plug 34.

The outer surface of the valve tube 40 is stepped so that the tube has a smaller diametrical outer surface 51 located adjacent the container 20 and a larger diametrical surface 53 as shown in Fig. 3. A coupler 52 is moveably mounted on the diametrical outer surface 51. The coupler 52 has an internally threaded portion 55 designed to be threadably engaged with the external thread 21 of the tubular spout 22.

An O-ring 54, or other suitable seal, is provided between the coupler 52 and the outer surface 51 to further seal the threaded interface between the coupler 52 and the tubular spout 22.

The valve tube 40 is longitudinally inserted into the bore 30 so that the prongs 48 project into and are closely received within the recesses 50. The coupler 52 is then screwed to the tubular spout 22. The resulting compression of the O-ring 54 between the coupler 52 and tubular spout 22 also tends to radially expand the O-ring 54, relative to the longitudinal axis of the valve tube 40, and thereby frictionally engage the coupler 52 and tubular spout 22 with the valve tube 40 so as to prevent leakage and, as well, to impede axial movement of the valve tube 40.

A conventional structure for closing the valve tube such as a closed valve (not shown), for example, a ball valve, may be engaged to the free end of the larger diametrical outer surface 53 by threaded connection or alternative, known engagement means.

The prongs 48 extending from valve tube 40 are separated from each other at circumferentially spaced intervals separated by spaces 49.

In order to allow the contents of the container to be withdrawn, the inner closure plug 34 must be removed. The valve tube 40 is rotated to uncrew the closure plug 34 from the internal thread 23 of the tubular spout 22 or hexagonal flange 24, or both. The closure plug 34 is then pushed into the container 20 and thereby positively unseated from the drain spout assembly.

As the inner closure plug 34 is loosened, flowables seep into the valve tube thereby equalizing the pressure on each side of the closure plug 34 in order to facilitate the turning und pushing movements of the closure plug 34 into the container 20 and away from the drain spout assembly. Even if the closure plug fails to fall away from the drain spout, the spaces 49 cut into the end of the valve tube, adjacent to the prongs 48, nevertheless allow outflow of the contained fluid.

The closure plug 34 may have various shapes and, as shown in the embodiment of Figure 6, is provided with a central tubular portion threaded on its outer surface for engagement with the internal threads 23 of the tubular spout and hexagonal flange.

Outer threads 37, can be provided on the outer diametrical surface 51 of valve tube 40, as shown in Figure 7, which engage the internal threads 23 of the tubular spout 22 after or coincidental with the insertion of the prongs 48 into the recesses 50 to allow for a positive threaded interconnection of the valve tube 40 and the drain spout assembly. Alternatively, the outer threads 37 can be positioned on the smaller diametrical surface 51 adjacent to the transition to the larger diametrical surface. In such case, a shoulder (not shown) having a female thread would be formed on the aft section of the coupler 52 for engagement with the outer threads 37.

The assembly, as disclosed herein, is preferably constructed from injection molded plastic parts.

In lieu of a plastic bag also a plastic liner may be used within the fibreboard container as the plastic retainer member 38 for retaining the bulk flowables. The annular flange 26 is preferably located between the plastic retainer member and the fibreboard wall to preclude abrasion of the liner due to rubbing against the wall which could occur during transport of a loaded container. Though less preferable, the annular flange 26 could be sealed to the side of the plastic liner member which is remote from the inner wall surface 47 of the fibreboard container 20. The bag or liner may alternatively comprise two or more plies, in which case, one or more of the plies can be fixed to opposite sides of the annular flange 26. To facilitate construction of the valve tube 40, the tubular portion thereof and prongs 48 may be fabricated from separate plastic parts adhesively joined together. The drain spout assembly is useable with doublewall and quadruple-wall corrugated fibreboard side walls of containers. In addition, for heavier gross weights, the assembly may be utilized in connection with bag-in-box containers provided with a full-depth multi-wall corrugated liner between the outer multi-wall fibreboard side wall and the inner plastic member (bag or liner) which retains the flowables contained in the container. In addition, it will be apparent that the tubular spout 22 could extend through the side wall opening 25 and be attached directly to the annular flange with the hexagonal flange 24 circumscribing the tubular spout within the opening 25.

## Claims

1. A bulk container (20) of the type having a side wall of multi-wall fibreboard with a side wall opening (25) extending therethrough from an inner wall surface (47), to an outer wall surface (41), and a plastic retainer member (38) supportedly mounted within the container (20) for retaining bulk flowables, a drain spout assembly mounted in the side wall opening (25) and comprising a tubular spout (22) projecting through the side wall opening (25), an annular flange (26) provided at the inner end of the tubular spout (22) and clamping means (28) fastened on an outwardly projecting portion of the tubular spout (22), the side wall thereby being sandwiched between the flange (26) and the clamping means (28), closure means (34) provided at the inner end of the tubular spout (22) for closing the flow path through the tubular spout (22), a tubular member (40) for axial insertion into the tubular spout (22) and for removal of the closure means (34) and sealing means to seal the interface between the tubular spout (22) and the tubular member (40), characterized in that the plastic retainer member (38) has a drain opening (39) extended therethrough in registry with the side wall opening (25), the annular flange (26) is sealed to the plastic retainer member (38) about the drain opening, that restraining means (24) are operatively engaged to the multiwall fibreboard within the side wall opening (25) for restraining rotation of the tubular spout (22) relative to the plastic retainer member (38), that the closure means comprises a threaded closure plug (34) screwed into a threaded portion (23) of the tubular spout (22), that the tubular member (40) has a portion (48) designed for reception in the closure plug (34) and that means (53) are provided outside of the container, such that the tubular member (40) may be gripped for translating movement of the portion (48) into engagement with closure plug (34) and into rotary movement of the closure plug (34) to unscrew the latter and remove it from the tubular spout (22) inwardly into the retainer member (38), and that the sealing means comprises a coupler (52) movably mounted on the outer surface (51) of the tubular member (40), threaded on the outer end of the tubular spout (22) and pressing a sealing ring (54) against the outer peripheral surface of the tubular member (40) to provide a fluid-tight connection between the tubular spout (22) and the tubular member (40) but allowing a rotational and displaceable relative movement therebetween.

2. A bulk container according to claim 1, characterized in that the restraining means (24) comprises a polygonal flange having a polygonal cross-section interconnected between the spout means (22) and the annular flange (26).

3. A bulk container according to claim 2, characterized in that the side wall opening (25) comprises a polygonal cross-section, the polygonal flange being received within the side wall opening (25) tightly fitted against the fibreboard side wall (41 to 47).

4. A bulk container according to claim 3, characterized in that the polygonal cross-section of the side wall opening (25) and the polygonal cross-section of the polygonal flange are complementary.

5. A bulk container according to claim 3 or 4, characterized in that each of the side wall opening (25) and the polygonal flange has a hexagonal cross-section.

6. A bulk container according to at least one of the claims 1 to 5, characterized in that the annular flange (26) is mounted intermediate the inner surface of the side wall (41 to 47) and the plastic retainer member (38).

7. A bulk container according to at least one of the claims 1 to 6, characterized in that the tubular spout (22) comprises an external thread (21) and an internal thread (23), and the clamping means (28) comprises a nut threadably engaged to the external thread (21) of the tubular spout (22) in abutment with the outer surface of the side wall (41 to 47) for holding the annular flange (26) against the inner surface of the side wall (41 to 47).

8. A bulk container according to at least one of the claims 1 to 7, characterized in that the portion (48) of the tubular member (40) designed for reception in the closure member (34) comprises a plurality of prongs projecting from the tubular member (40), and wherein the closure plug (34) comprises a plurality of recesses (50) for receiving the prongs.

9. A bulk container according to claim 8, characterized in that the tubular member (40) includes a circular end, the prongs are mounted to the circular end at circumferentially spaced intervals relative to each other to form apertures (49) therebetween through which the flowables may flow radially into the tubular member (40) after having removed the closure plug (34) from the tubular spout (22).

**Revendications**

1. Conteneur de matériaux en vrac (20) comportant une paroi latérale en carton de fibre multi-couches avec une ouverture de paroi latérale (25) qui s'étend à travers la paroi d'une surface intérieure (47) à une surface extérieure (41), et un récipient en plastique (38) qui est monté de manière à être soutenu à l'intérieur du conteneur (20) pour le stockage de matériaux en vrac fluides, un dispositif d'évacuation monté dans l'ouverture de la paroi latérale (25), qui comporte un tuyau de décharge (22) traversant l'ouverture de la paroi latérale (25), une bride annulaire (26) à l'extrémité intérieure du tuyau de décharge (22) et des moyens de serrage (28) qui sont fixés à une partie en projection vers l'extérieur du tuyau de décharge (22), la paroi latérale étant ainsi tenue en "sandwich" entre la bride (26) et les moyens de serrage (28), un moyen de fermeture (34) prévu à l'extrémité intérieure du tuyau de décharge (22) pour fermer le canal d'écoulement à travers le tuyau de décharge (22), avec un élément tubulaire (40) pour l'insertion axiale dans le tuyau de décharge (22) et pour enlever le moyen de fermeture (34) et un moyen d'étanchéité pour sceller l'interface entre le tuyau de décharge (22) et l'élément tubulaire (40), caractérisé en ce que le récipient en plastique (38) possède une ouverture de déversement (39) s'étendant à travers ce dernier en alignement sur l'ouverture de la paroi latérale (25), que la bride annulaire (26) est scellée au récipient en plastique (38) autour de l'ouverture de déversement, qu'un moyen de rétention (24) est opérationnellement en prise avec le carton de fibre multi-couches à l'intérieur de l'ouverture de la paroi latérale (25) pour empêcher la rotation du tuyau de décharge (22) par rapport au récipient en plastique (38), que le moyen de fermeture présente un bouchon de fermeture fileté (34) vissé dans la partie filetée (23) du tuyau de décharge (22), que l'élément tubulaire (40) possède une section (48) conçue pour recevoir le bouchon de fermeture (34) et que des moyens (53) sont prévus à l'extérieur du conteneur de manière à ce que l'élément tubulaire (40) puisse être saisi pour amener la section (48) en prise avec le bouchon de fermeture (34), par un mouvement de translation, et pour transmettre un mouvement de rotation du bouchon de fermeture (34) pour dévisser ce dernier et l'enlever du tuyau de décharge (22) vers l'intérieur dans le récipient (38), et que le moyen de scellement comporte un coupleur (52) monté de manière mobile sur la surface extérieure (51) de l'élément tubulaire (40) vissé sur l'extrémité extérieure du tuyau de décharge (22) et pressant l'anneau d'étanchéité (54) contre la surface périphérique extérieure de l'élément tubulaire (40) pour établir une liaison étanche aux fluides entre le tuyau de décharge (22) et l'élément tubulaire (40) mais permettant un mouvement de rotation et de déplacement relatif entre ces deux derniers.

2. Conteneur de matériaux en vrac selon la revendication 1, caractérisé en ce que le moyen de rétention (24) comporte une bride polygonale ayant une section transversale polygonale qui relie le tuyau de décharge (22) et la bride annulaire (26).

3. Conteneur de matériaux en vrac selon la revendication 2, caractérisé en ce que l'ouverture de la paroi latérale (25) comporte une section transversale polygonale, une bride polygonale étant reçue à l'intérieur de l'ouverture de la paroi latérale (25) et forme un joint étanche avec la paroi latérale en carton de fibre (41 à 47).

4. Conteneur de matériaux en vrac selon la revendication 3, caractérisé en ce que la section transversale polygonale de l'ouverture de la paroi latérale (25) et la section transversale polygonale de la bride polygonale sont complémentaires.

5. Conteneur de matériaux en vrac selon les revendications 3 ou 4, caractérisé en ce qu'aussi bien l'ouverture de paroi latérale (25) que la bride polygonale possèdent une section transversale hexagonale.

6. Conteneur de matériaux en vrac selon au moins l'une des revendications 1 à 5, caractérisé en ce que la bride annulaire (26) est montée entre la surface intérieure de la paroi latérale (41 à 47) et le récipient en plastique (38).

7. Conteneur de matériaux en vrac selon au moins l'une des revendications 1 à 6, caractérisé en ce que le tuyau de décharge (22) comporte un filet extérieur (21) et un filet intérieur (23), et que les moyens de serrage (28) comportent un écrou qui est vissé au filet extérieur (21) du tuyau de décharge (22) jusqu'à ce qu'il touche la surface extérieure de la paroi latérale (41 à 47) pour tenir la bride annulaire (26) contre la surface intérieure de la paroi latérale (41 à 47).

8. Conteneur de matériaux en vrac selon au moins l'une des revendications 1 à 7, caractérisé en ce que la section (48) de l'élément tubulaire (40) conçue pour recevoir l'élément de fermeture (34) comporte une pluralité de dents en projection à partir de l'élément tubulaire (40), et que le bouchon de fermeture (34) comporte une pluralité d'échancrures (50) pour recevoir les dents.

9. Conteneur de matériaux en vrac selon la revendication 8, caractérisé en ce que l'élément tubulaire (40) comporte une extrémité circulaire, que les dents sont montées sur l'extrémité circulaire sur la circonférence et espacées l'une de l'autre pour former des ouvertures (49) à travers lesquelles les fluides peuvent couler de manière radiale dans l'élément tubulaire (40) après que le bouchon de fermeture (34) a été enlevé du tuyau de décharge (22).

**Patentansprüche**

1. Schüttgutcontainer der Art, die eine Seitenwand aus mehrwandigem Faserstoff mit einer Seitenwandöffnung (25) aufweist, die sich dort von einer Innenwandfläche (47) zu einer Außenwandfläche (41) hindurch erstreckt, und ein Kunststoffbehälterglied (38) aufweist, das im Container (20) zur Lagerung fließfähiger Schüttgüter abgestützt gelagert ist, und eine in der Seitenwandöffnung (25) befestigte Entleerungs-Anordnung aufweist, die einen, die Seitenwandöffnung (25) durchsetzenden rohrförmigen Ausguß (22) umfaßt, mit einem Ringflansch (26) am inneren Ende des rohrförmigen Ausgusses (22) und Klemmitteln (28), die an einem nach außen ragenden Teil des rohrförmigen Ausgusses (22) befestigt sind, wodurch die Seitenwand zwischen dem Flansch (26) und den Klemmitteln (28) sandwichartig aufgenommen ist, mit Verschlußmitteln (34) am inneren Ende des rohrförmigen Ausgusses (22), um den Fließweg durch den rohrförmigen Ausguß (22) zu schließen, mit einem rohrförmigen Glied (40) zum axialen Einsetzen in den rohrförmigen Ausguß (22) und zum Entfernen der Verschlußmittel (34) und mit einem Dichtmittel zum Abdichten der Zwischenfläche zwischen dem rohrförmigen Ausguß (22) und dem rohrförmigen Glied (40), dadurch gekennzeichnet, daß das Kunststoffbehälterglied (38) eine, es in Ausrichtung mit der Seitenwandöffnung (25) durchsetzende Entleerungsöffnung (39) aufweist, daß der Ringflansch (26) mit dem Kunststoffbehälterglied (38) um die Entleerungsöffnung herum abgedichtet ist, daß Haltemittel (24) funktionsfähig mit dem mehrwandiqen Faserstoff innerhalb der Seitenwandöffnung (25) in Eingriff stehen, um eine Relativdrehung des rohrförmigen Ausgusses (22) bezüglich des Kunststoffbehältergliedes (38) zu verhindern, daß die Verschlußmittel einen mit Gewinde versehenen Verschlußstopfen (34) aufweisen, der in einen Gewindeabschnitt (23) des rohrförmigen Ausgusses (22) eingeschraubt ist, daß das rohrförmige Glied (40) einen Abschnitt (48) zur Aufnahme des Verschlußstopfens (34) aufweist, und daß Mittel (53) außerhalb des Containers vorgesehen sind, derart, daß das rohrförmige Glied (40) gegriffen werden kann, um dem Abschnitt (48) eine Bewegung in Eingriff mit dem Verschlußstopfen (34) und in eine Drehbewegung des Verschlußstopfens (34) mitzuteilen, um letzteren auszuschrauben und ihn vom rohrförmigen Ausguß (22) in das Behälterglied (38) hinein zu entfernen, und daß das Dichtmittel einen Kuppler (52) umfaßt, der auf der Außenfläche (51) des rohrförmigen Gliedes (40) beweglich angebracht, auf dem äußeren Ende des rohrförmigen Ausgusses (22) verschraubbar ist und einen Dichtring (54) gegen die äußere Umfangsfläche des rohrförmigen Gliedes (40) drückt, um eine dichte Verbindung zwischen dem rohrförmigen Ausguß (22) und dem rohrförmigen Glied (40) vorzusehen, jedoch eine relative Dreh- und Verschiebebewegung dazwischen zuzulassen.

2. Schüttgutcontainer nach Anspruch 1, dadurch gekennzeichnet, daß das Haltemittel (24) einen polygonalen Flansch mit polygonalem Querschnitt aufweist, der das Ausgußmittel (22) mit dem Ringflansch (26) verbindet.

3. Schüttgutcontainer nach Anspruch 2, dadurch gekennzeichnet, daß die Seitenwandöffnung (25) einen polygonalen Querschnitt aufweist, wobei der polygonale Flansch in der Seitenwandöffnung (25) aufgenommen ist und gegen die Faserstoffseitenwand (41 bis 47) dicht eingesetzt ist.

4. Schüttgutcontainer nach Anspruch 3, dadurch gekennzeichnet, daß der polygonale Querschnitt der Seitenwandöffnung (25) und der polygonale Querschnitt des polygonalen Flansches komplementär sind.

5. Schüttgutcontainer nach Anspruch 3 oder 4, dadurch gekennzeichnet, daß sowohl die Seitenwandöffnung (25) als auch der polygonale Flansch einen sechseckigen Querschnitt aufweisen.

6. Schüttgutcontainer nach mindestens einem der Ansprüche 1 bis 5, dadurch gekennzeichnet, daß der Ringflansch (26) zwischen der Innenfläche der Seitenwand (41 bis 47) und dem Kunststoffbehälterglied (38) angebracht ist.

7. Schüttgutcontainer nach mindestens einem der Ansprüche 1 bis 6, dadurch gekennzeichnet, daß der rohrförmige Ausguß (22) ein Außengewinde (21) und ein Innengewinde (23) aufweist und daß die Klemmittel (28) eine mit dem Außengewinde (21) des rohrförmigen Ausgusses (22) verschraubbar bis zur Anlage an der Außenfläche der Seitenwand (41 bis 47) in Eingriff stehende Mutter aufweist, um den Ringflansch (26) gegen die Innenfläche der Seitenwand (41 bis 47) zu halten.

8. Schüttgutcontainer nach mindestens einem der Ansprüche 1 bis 7, dadurch gekennzeichnet, daß der Abschnitt (48) des zur Aufnahme des Verschlußgliedes (34) bestimmten rohrförmigen Gliedes (40) mehrere Zinken aufweist, die vom rohrförmigen Glied (40) vorstehen und daß der Verschlußstopfen (34) mehrere Ausnehmungen (50) zur Aufnahme der Zinken aufweist.

9. Schüttgutcontainer nach Anspruch 8, dadurch gekennzeichnet, daß das rohrförmige Glied (40) ein kreisförmiges Ende aufweist, daß die Zinken an dem kreisförmigen Ende mit Umfangsabständen relativ zueinander befestigt sind, um Öffnungen (49) dazwischen zu bilden, durch die die Fließmittel radial in das rohrförmige Glied (40) strömen können, nachdem der Verschlußstopfen (34) vom rohrförmigen Ausguß (22) entfernt worden ist.

FIG. 2

FIG. 1

FIG. 3

FIG. 4

FIG. 5

FIG. 6

FIG. 7

EP 0 253 286 B1